# EUROPEAN PATENT APPLICATION

(11) **EP 3 628 532 A1**
(43) Date of publication of application: **01.04.2020**
(21) Application number: 18196527.8
(22) Date of filing: 25.09.2018
(51) Int. Cl.: B60L 53/14, B60L 53/31, B60L 53/66, B60L 50/60, B60L 53/10

(54) **TIME DELAY TOLL SYSTEM FOR CHARGING PILES AND ITS METHOD**

(71) Applicant: Beijing X-Charge Co., Ltd., Beijing 100015 (CN)
(72) Inventor: DING, Rui, Beijing, Beijing 100015 (CN)
(74) Representative: Monzón de la Flor, Luis Miguel

(57) **Abstract**

The invention discloses a time delay toll system for charging piles, which can promote the electric automobile user to leave as early as possible or settle accounts as early as possible after the charging is ended, and thus can improve the availability factor of the charging piles and parking stalls, and increase the operating efficiency of the charging piles. The system comprises a charging state inspection module, which is configured to detect the magnitude of voltage of communication cables of the charging piles and send the magnitude of voltage to the microprocessor; a parking detection module, which is installed on the parking stall, and is configured to detect whether an automobile is on this parking stall; a microprocessor, which is configured to determine whether the charging is ended according to the magnitude of voltage, and if yes, to notify a timer to reckon by time and send the time that the automobile stayed from the time beginning to leaving to a fee deduction module; and the fee deduction module, which is configured to calculate charging expense and time delay expense, and is configured to deduct the charging expense and the time delay expense from the user's fund. The present invention also provides a method using the time delay toll system for charging piles.

## Description

### Technical Field

The present invention relates to the technical field of new energy vehicles, and particularly to a time delay toll system for charging piles and a method using the system.

### Background of the Invention

With the development of the technology and the science, the new energy vehicles are more and more popular in common people due to the energy saving and environmental protection. Thus, in the current parking lot, more and more charging piles are used.

However, the current charging piles are often faced with such a problem that the user still occupy the charging piles for long time and do not leave after the charging is ended. This condition greatly hindered use of other customers, and resulted in a waste of charging parking spaces and charging piles.

### Contents of the Invention

The technical problem addressed by the present invention is to overcome the deficiency in the prior art, and to provide a time delay toll system for charging piles, which can promote the electric automobile user to leave as early as possible or settle accounts as early as possible after his charging is ended, and therefore can improve the availability factor of the charging piles and parking stalls and can increase the operating efficiency of the charging piles.

The technical solution of the present invention is that the system includes:
a charging state inspection module, which is configured to detect the magnitude of voltage of the communication cables of charging piles, and send the magnitude of voltage to the microprocessor;
a parking detection module, which is installed on the parking stall, and is configured to detect whether an automobile is on this parking stall;
a microprocessor, which is configured to determine whether the charging is ended according to the magnitude of voltage, and if yes, to notify a timer to reckon by time and send the time that the automobile stayed from the time beginning to leaving to a fee deduction module;
the fee deduction module, which is configured to calculate charging expense and time delay expense, and is configured to deduct the charging expense and the time delay expense from the user's fund.

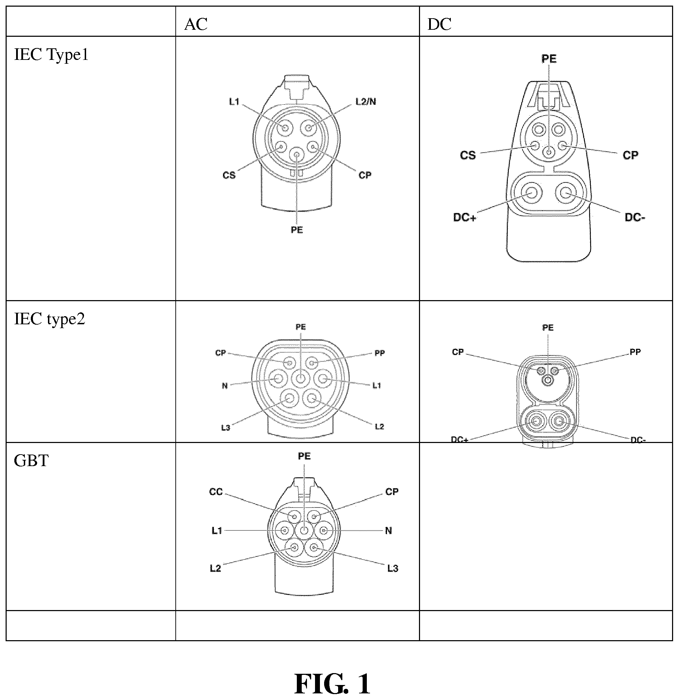

The present invention also provides a method using the said time delay toll system for charging piles, wherein the charging piles include IEC Typel, Type2, GBT AC charging piles and CCS DC charging piles, Fig. 1 illustrating the interfaces, and the data come from Pheonix Contact.

The method comprises the following steps:
(1) starting charging, the magnitude of voltage being 6V;
(2) when the charging is ended, and when the magnitude of voltage is 9V, performing step (3), otherwise performing step (5);
(3) the timer beginning to reckon by time, and getting the time that the automobile stayed from the time beginning to leaving;
(4) calculating charging expense and time delay expense;
(5) the magnitude of voltage being 12V;
(6) deducting the charging expense and the time delay expense from the user's fund.

By judgment for the connection status of hardware and the flexible billing mechanism, the present invention can promote the electric vehicle users to leave as soon as possible with the aid of the economic lever means after the charging ends, make the charging piles and parking spaces available to the next users, improve the usage efficiency of the parking spaces and charging piles, and increase the operation efficiency of the charging piles.

### Description of the Drawings

FIG. 1 is a view showing interfaces of the charging piles according to the present invention;
FIG. 2 is a structural schematic view of a time delay toll system for charging piles according to the present invention;
FIG. 3 is a flow chart, showing a method using the time delay toll system for charging piles according to the present invention;
FIG. 4 is a flow chart, showing a time delay toll method for charging piles according to the present invention, which method makes use of the charging state inspection module in combination with the parking detection module; and
FIG. 5 illustrates the definition for CP of the charging pile in Appendix A of IEC61851-1.

### Description of the Preferred Embodiments

As shown in FIG. 1, a time delay toll system for charging piles includes:
a charging state inspection module, which is configured to detect the magnitude of voltage of the communication cables of the charging piles, and send the magnitude of voltage to a microprocessor (with respect to detection for the current, use of the voltage metering can ensure the continuous and accurate monitoring for the vehicle in the case where the vehicle is in a stationary state or in a non-charging state (no current));
a parking detection module, which is installed on the parking stall, and is configured to detect whether an automobile is on this parking stall (the parking detection module is a radar module, which is mounted in the vicinity of the parking stall to ensure that the radar is aligned with the parking stall to be monitored and simultaneously ensure that the vehicle can be accurately detected regardless of the way it is docked, wherein the radar may be an ultrasonic radar or an infrared radar);
a microprocessor, which is configured to determine whether the charging is ended according to the magnitude of voltage, and if yes, to notify the timer to reckon by time, and send the time that the automobile stayed from the beginning to leaving to a fee deduction module;
the fee deduction module, which is configured to calculate charging expense and time delay expense, and is configured to deduct the charging expense and time delay expense from the user's fund (After the user stops occupying the parking space, that is, the radar and the voltage state of the charging pile and vehicle communication cable meet the vehicle leaving condition, the fee deduction module is notified to stop the delay fee calculation. According to the delay fee billing logic set by the system, the fee deduction module selects "time multiplied by the unit price of delay fee" or "one-time fee" as the billing mode, and after the final result is calculated out, it is displayed in the customer bill and the customer is invited to pay it, wherein if the customer has a balance in the charging system, the system will deduct the fee automatically).

By judgment for the connection status of hardware and the flexible billing mechanism, the present invention can promote the electric vehicle users to leave as soon as possible with the aid of the economic lever means after the charging ends, make the charging piles and the parking spaces available to the next users, improve the usage efficiency of the parking spaces and charging piles, and increase the operation efficiency of the charging piles.

Preferably, the system also includes a communication module, which is configured to connect to the microprocessor, wherein when the timer begins to reckon by time, the time delay expense is sent to the user by the communication module.

Preferably, the charging pile is an AC charging pile, when the magnitude of voltage is 12V, the microprocessor confirms that it does not connect with a vehicle; and when the magnitude of voltage is 9V or 6V, the microprocessor confirms that it has connected with a vehicle (the basis for setting the magnitude of voltage is IEC61851, IEC62196, SAE J1772 and GB20234 standard).

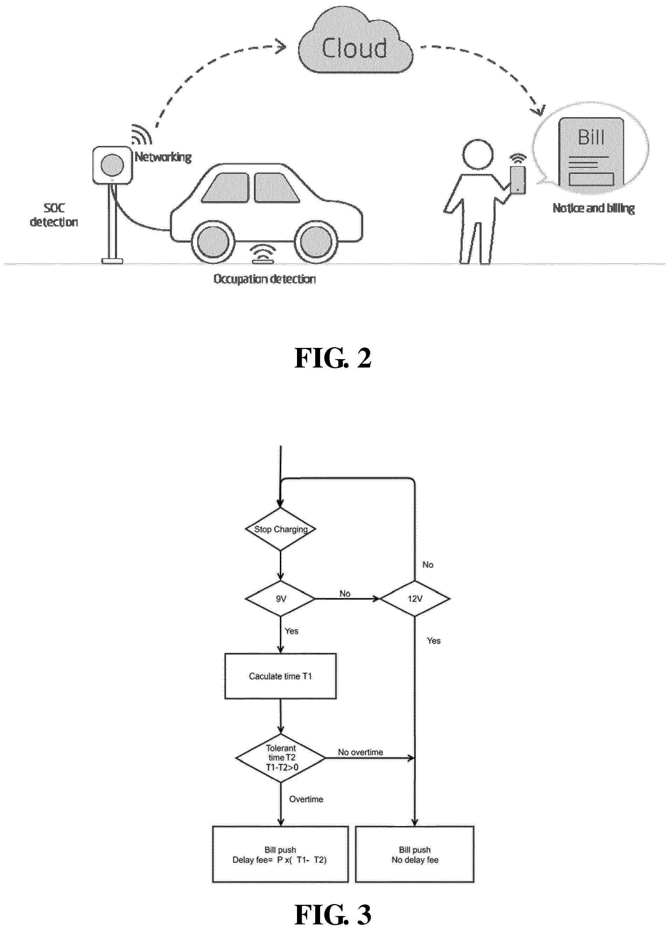

As shown in FIG. 2, the present invention also provides a method that adopts the time delay toll system for charging piles, which comprises the following steps:
(1) Starting charging, the magnitude of voltage being 6V;
(2) When the charging is ended, and when the magnitude of voltage is 9V, performing step (3), otherwise performing step (5);
(3) The timer beginning to reckon by time, and getting the time that the automobile stayed from the time beginning to leaving;
(4) calculating charging expense and time delay expense;
(5) the magnitude of voltage being 12V;
(6) deducting the charging expense and the time delay expense from the user's fund.

Preferably, the step (3) also includes providing a grace time, and if the vehicle can leave the parking stall within the grace time, the time delay expense is zero.

Preferably, the step (3) also includes providing a grace time, and if the vehicle can leave the parking stall within the grace time, the time delay expense is zero (the operator can set the delay fee grace time in the operation backstage, and set the various units such as seconds, minutes, and hours. After the setting is completed, the cloud operation system will push the setting information to a specific charging device. After receiving the command, the specific device starts to execute the new configuration. When the operator sets the delay fee to be 0, the user does not need to pay the delay fee.).

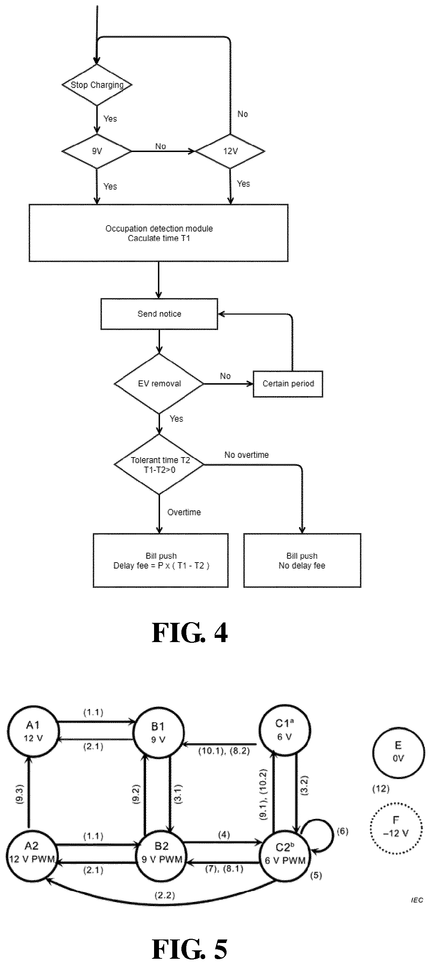

A specific example is given below.
(1) According to the definition of CP of the charging pile in Appendix A of IEC61851-1, whether the vehicle is connected with the charging pile can be judged according to the CP, and the CP voltage is changed from 6V to 9V after the charging stop command is initiated remotely or the vehicle end is fully charged due to SOC, as shown in Figure 5.
As shown in Table 1, the charging pile provides the real-time feedback of the CP voltage state to the internal program and the remote system to determine whether the vehicle is connected and whether the charging is stopped. At the same time, according to the following logic, it is judged whether the delay fee is to be billed.

**Table 1**

| **the voltage of AC charging pile CP communication cable** | **corresponding state** |
|---|---|
| 12V | don't connect to a vehicle |
| 9V have connected | have connected to a vehicle pre-charging or stopping the charging |
| 6V have connected | have connected to a vehicle |

(2) When the charging pile hardware judges that the user has finished the charging (fill or manual stop), it sends notifications to the user according to the "grace time" preset by the software, requiring the user to draw the charging device and moves the automobile within the grace time, and at the same time starting the countdown.
(3) When the user cuts off the connection (drawing the charging device) within the delay time fee grace time, the system does not charge any delay cost.
(4) When the user stays beyond the delay time fee grace time, the system will begin to a new timing or record, and charge according to the billing standard set by the system.
(5) As for delay fee setting, it can be calculated in accordance with the time as a unit, or can be single one-time billing.

The above contents are only the preferable embodiments of the present invention, and do not limit the present invention in any manner. Any improvements, amendments and alternative changes made to the above embodiments according to the technical spirit of the present invention shall fall within the claimed scope of the present invention.

## Claims

1. A time delay toll system for charging piles, **characterized in that**, the system includes:
a charging state inspection module, which is configured to detect the magnitude of voltage of communication cables of the charging piles, and send the magnitude of voltage to a microprocessor;
a parking detection module, which is installed on a parking stall, and is configured to detect whether an automobile is on the parking stall;
a microprocessor, which is configured to determine whether the charging is ended according to the magnitude of voltage, and if yes, to notify a timer to reckon by time and send the time that the automobile stayed from the time beginning to leaving to a fee deduction module; and
the fee deduction module, which is configured to calculate charging expense and time delay expense, and is configured to deduct the charging expense and the time delay expense from the user's fund.

2. The time delay toll system for charging piles according to the claim 1, **characterized in that**, the system further comprises a communication module, which is configured to connect to the microprocessor, wherein when the timer begins to reckon by time, the time delay expense is sent to the user by the communication module.

3. The time delay toll system for charging piles according to the claim 2, **characterized in that**, the charging piles are IEC Typel, Type2, GBT AC charging piles and CCS DC charging piles; when the magnitude of voltage is 12V, the microprocessor confirms that it does not connect with a vehicle, and when the magnitude of voltage is 9V or 6V, the microprocessor confirms that it has connected with a vehicle

4. A method using the time delay toll system for charging piles according to the claim 3, **characterized by** including the following steps:
(1) starting charging, the magnitude of voltage being 6V;
(2) when the charging is ended, and when the magnitude of voltage is 9V or 6V, performing step (3), otherwise performing step (5);
(3) the timer beginning to reckon by time, and getting the time that the vehicle stayed from the time beginning to leaving;
(4) calculating charging expense and time delay expense;
(5) the magnitude of voltage being 12V; and
(6) deducting the charging expense and the time delay expense from the user's fund.

5. The method according to the claim 4, **characterized in that**, the step (3) further comprises providing a grace time, and if the vehicle leaves the parking stall within the grace time, the time delay expense is zero.
